# DEMANDE DE BREVET EUROPEEN

(11) **EP 0 800 333 A2**
(43) Date de publication de la demande: **08.10.1997**
(21) Numéro de dépôt: 97400700.7
(22) Date de dépôt: 27.03.1997
(51) Int. Cl.: H05B 3/86

(54) **Pare-brise pouvant être chauffé électriquement**

(30) Priorité: 02.04.1996 DE 19613123
(71) Demandeur: SAINT-GOBAIN VITRAGE, 92400 Courbevoie (FR)
(72) Inventeur: Gillner, Manfred, 52078 Aachen (DE)
(74) Mandataire: Muller, René

(57) **Abrégé**

Un pare-brise (1) en verre feuilleté est pourvu, dans la zone de la position de repos des essuie-glaces, de fils de résistance électrique chauffants. Les fils de résistance chauffants sont noyés dans la couche intermédiaire thermoplastique du vitrage en verre feuilleté. Ils sont disposés sous la forme de boucles de fils (2) imbriquées les unes dans les autres montées en parallèle. Les extrémités (3, 4) des boucles de fils (2) sont brasées à des conducteurs collecteurs (5, 6) en clinquant, qui sont disposés très près l'un de l'autre au bord du pare-brise et sont reliées à des conducteurs de raccordement électrique (7, 8).

## Description

La présente invention concerne un pare-brise en verre feuilleté, qui est pourvu, dans la zone de la position de repos des essuie-glaces, de fils de résistance électrique chauffants montés en parallèle noyés dans la couche intermédiaire thermoplastique, qui sont en contact avec des pellicules de clinquant agissant comme conducteurs collecteurs, également noyées dans la couche intermédiaire et reliées à des conducteurs d'alimentation de courant.

Des pare-brise pouvant être chauffés en verre feuilleté, dans le cas desquels le champ chauffé formé de fils chauffants parallèles se limite à la zone des essuie-glaces, sont connus par le document EP 0 032 139 B1. Dans ce cas, de minces bandes de clinquant de cuivre, qui sont disposées des deux côtés du champ chauffé, servent de conducteurs collecteurs. Les conducteurs d'alimentation électrique pour ces conducteurs collecteurs sortent habituellement chacun du vitrage en verre feuilleté à une extrémité des conducteurs collecteurs, c'est-à-dire à des endroits très éloignés l'un de l'autre.

Il est aussi connu de faire sortir du vitrage en verre feuilleté en des endroits de manière très rapprochés les conducteurs de raccordement pour les deux conducteurs collecteurs qui sont disposés des deux côtés du champ chauffé à l'extrémité des fils de résistance s'étendant de façon rectiligne. Cependant, un conducteur de liaison, de l'endroit de raccordement électrique au moins à l'un des conducteurs collecteurs, doit, dans ce cas, être prévu à l'intérieur du vitrage en verre feuilleté, c'est-à-dire également noyé dans la couche intermédiaire thermoplastique. Habituellement, on utilise à cet effet les mêmes bandes de clinquant de cuivre étamées que pour les conducteurs collecteurs. Les collecteurs de liaison sont disposés entre les conducteurs collecteurs et l'endroit de raccordement électrique le long du bord inférieur du pare-brise. Dans cette forme de réalisation, le raccordement électrique est facilité après le montage du pare-brise, puisqu'il peut être réalisé dans ce cas à l'aide d'une seule fiche bipolaire. Hormis le fait que la disposition des conducteurs de liaison représente une opération de travail relativement coûteuse supplémentaire, les conducteurs de liaison sont optiquement dérangeants à cause de leurs surfaces métalliques. C'est pourquoi, ils sont recouverts par impression d'une couche d'encre opaque sur l'une des deux feuilles de verre du vitrage en verre feuilleté. Cela signifie encore un coût de main-d'oeuvre supplémentaire.

L'invention a pour but de procurer un pare-brise pouvant être chauffé électriquement du type mentionné, qui soit plus simple dans sa structure, et dans lequel en particulier aucun conducteur de liaison métallique optiquement dérangeant n'est visible. En outre, le nouveau pare-brise doit pouvoir être fabriqué dans l'ensemble à moindre coût et en moins de temps.

Ce but est atteint selon l'invention en ce que les deux bandes de clinquant agissant comme des conducteurs collecteurs sont disposées très près l'une de l'autre, et que les fils de résistance chauffants s'étendent en forme de boucles entre ces conducteurs collecteurs.

Dans la disposition selon l'invention des fils chauffants, les conducteurs de liaison optiquement dérangeants entre l'endroit de raccordement électrique et les conducteurs collecteurs proprement dits sont absents. Les longueurs de clinquant agissant comme conducteurs collecteurs peuvent de préférence être disposées directement au bord inférieur du pare-brise, de sorte qu'aucune bande de clinquant dérangeante n'est plus disposée même le long des bords latéraux du pare-brise. Du fait que le bord inférieur du pare-brise est exempt de longues bandes de clinquant dérangeantes, l'impression d'une couche de recouvrement peut aussi être supprimée.

Des formes de réalisation, des développements et d'autres avantages préférés de l'invention ressortiront des revendications dépendantes et de la description suivante de plusieurs exemples de réalisation, donnée avec référence aux dessins annexés.

Dans les dessins :
la Fig. 1 montre un pare-brise comportant les conducteurs de raccordement électrique au bord inférieur au milieu du vitrage;
la Fig. 2 montre un pare-brise comportant les conducteurs de raccordement électrique au bord inférieur dans une zone de coin;
la Fig. 3 montre un pare-brise comportant des conducteurs collecteurs disposés le long d'un bord latéral;
la Fig. 4 montre un pare-brise comportant une boucle chauffante supplémentaire le long d'un bord latéral, et
la Fig. 5 montre un pare-brise comportant des boucles chauffantes supplémentaires le long des deux bords latéraux.

Les pare-brise représentés sur les figures sont constitués de verre feuilleté et comprennent deux feuilles de verre individuelles, qui sont unies l'une à l'autre par une couche intermédiaire thermoplastique, en règle générale en polyvinylbutyral. Dans le tiers inférieur, à savoir dans la zone de la position de repos des essuie-glaces, les pare-brise présentent chacun un champ pouvant être chauffé électriquement. Dans ce champ pouvant être chauffé, les fils de résistance chauffants sont disposés dans la couche intermédiaire thermoplastique selon la nouvelle façon.

Des procédés pour l'application des fils de résistance chauffants en forme de boucles sont connus en tant que tels. Dans un procédé connu, le fil de résistance est enfoncé dans la pellicule thermoplastique, avant la fabrication du vitrage en verre feuilleté, à l'aide d'un outil chauffé, par exemple un rouleau presseur chauffé. Suivant un autre procédé connu, les fils de résistance sont déposés sur une pellicule support intermédiaire selon la disposition souhaitée et sont fixés sur celle-ci à l'aide d'une couche de colle, qui est constituée de la même matière que la couche intermédiaire thermoplastique. Les conducteurs collecteurs et, le cas échéant, les conducteurs d'alimentation de courant peuvent aussi être déjà disposés sur cette pellicule support intermédiaire et être reliés aux fils de résistance chauffants. A l'aide de la pellicule support intermédiaire, l'agencement de fils est transféré sur la couche intermédiaire thermoplastique ou sur l'une des deux feuilles de verre. Après fixation de l'agencement de fils sur la couche intermédiaire thermoplastique ou sur l'une des feuilles de verre, la pellicule support intermédiaire est retirée. Le vitrage en verre feuilleté est ensuite fabriqué avec application de chaleur et de pression.

Pour les fils de résistance chauffants, on utilise habituellement dans les vitrages pouvant être chauffés connus de minces fils de tungstène présentant une résistance électrique relativement élevée. L'utilisation de tels fils présentant une résistance électrique élevée est dans ce cas avantageuse, parce que la longueur de fil est prédéterminée par la distance séparant les conducteurs collecteurs, qui correspond à la dimension en largeur du champ chauffé dans le cas des formes de réalisation connues. Dans les pare-brise pouvant être chauffés selon l'invention, les fils de résistance chauffants montés en parallèle individuels sont cependant, suite à leur disposition en forme de boucles, au moins deux fois plus longs que dans les pare-brise pouvant être chauffés connus. Cela signifie que dans les pare-brise selon l'invention, on peut utiliser des fils chauffants présentant une conductibilité électrique supérieure, ainsi par exemple en particulier des fils chauffants en cuivre. Cela conduit non seulement à une baisse des coûts de matière, mais aussi en particulier au fait que les difficultés auxquelles est liée l'opération de brasage des fils de tungstène avec les conducteurs collecteurs sont évitées. Des fils de cuivre, qui sont recouverts d'un vernis noir, de sorte que des réflexions de lumière sur ces fils sont évitées, se sont révélés appropriés pour le but de l'invention. Particulièrement avantageuse est l'utilisation de fils de cuivre noircis, qui sont recouverts d'un vernis qui ne dérange pas lors du brasage des fils avec les conducteurs collecteurs, mais présente de bonnes propriétés d'étamage, de sorte qu'il ne doit pas être enlevé avant l'opération de brasage.

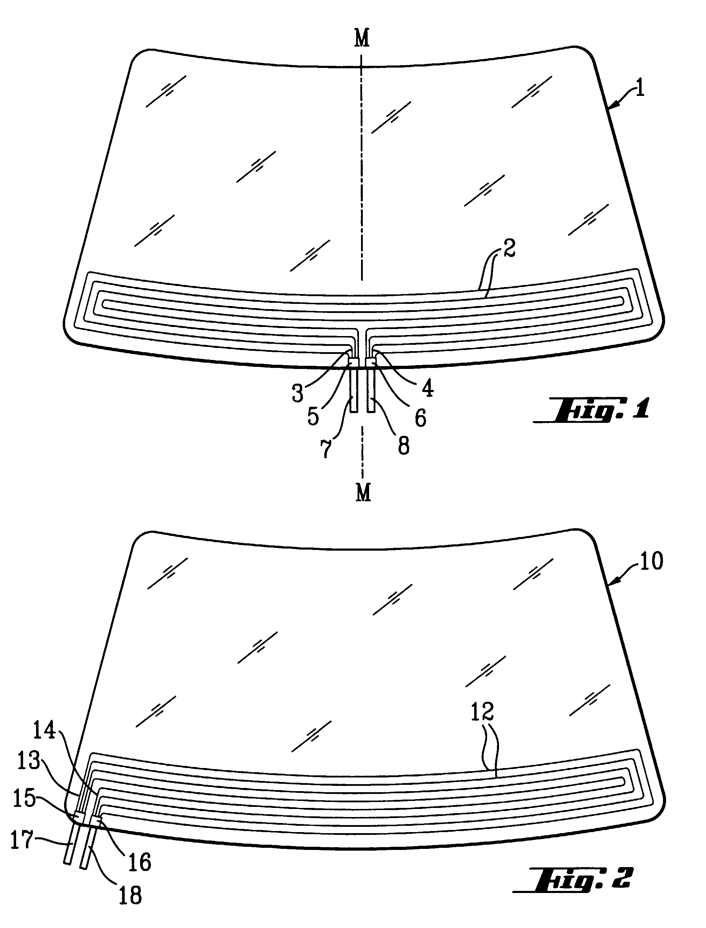

Dans la forme de réalisation représentée sur la Fig. 1, les fils chauffants 2 sont disposés dans le pare-brise 1 sous la forme de boucles imbriquées les unes dans les autres, axialement symétriques par rapport à la ligne médiane M-M. Dans la moitié inférieure de chaque boucle de fil, les deux extrémités 3, 4 de chaque boucle de fil sont coudées à angle droit vers le bas. Elles sont brasées à des longueurs de clinquant de cuivre 5, 6. Les longueurs de clinquant de cuivre 5, 6 représentent les conducteurs collecteurs pour les boucles conductrices montées en parallèle et sont disposées à faible distance l'une de l'autre entre les deux feuilles de verre individuelles du vitrage en verre feuilleté dans la couche intermédiaire thermoplastique, à proximité immédiate du bord au milieu du côté inférieur du pare-brise. Les longueurs de clinquant de cuivre 5, 6 sont directement reliées à des câbles plats 7, 8, qui sortent en tant que tels du vitrage en verre feuilleté et sont pourvus à l'extrémité de fils de raccordement ou de fiches de raccordement appropriés. Les longueurs de clinquant de cuivre 5, 6 peuvent aussi être venues d'une pièce avec les câbles plats 7, 8, dans le même clinquant de cuivre les câbles plats 7, 8 sortant du vitrage en verre feuilleté étant pourvus de façon opportune de couches d'isolation appropriées en matière plastique résistant à la traction.

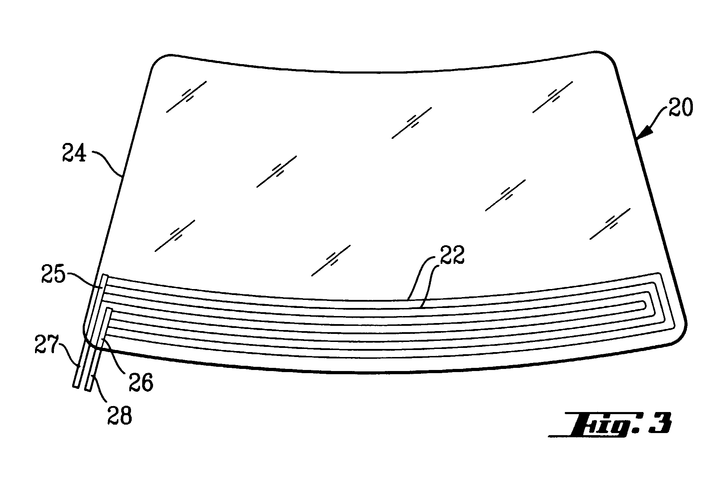

Le pare-brise 10 représenté sur la Fig. 2 est à nouveau pourvu dans, le tiers inférieur, d'un champ chauffé, qui présente la même étendue que le champ chauffé dans la forme de réalisation décrite précédemment. Dans ce cas également, les fils chauffants 12 s'étendent en substance sur toute la largeur du pare-brise selon une orientation parallèle au bord inférieur du pare-brise. Les fils chauffants sont à nouveau disposés sous forme de boucles imbriquées les unes dans les autres, les deux extrémités de chaque boucle de fil étant cependant dans ce cas coudées vers le bas à proximité d'un coin inférieur du pare-brise. Les zones d'extrémité 13 des boucles de fils sont brasées à une longueur de clinquant de cuivre 15, et les zones d'extrémité 14 des boucles de fils sont brasées à une longueur de clinquant de cuivre 16, les longueurs de clinquant de cuivre 15, 16 représentant les conducteurs collecteurs pour les boucles conductrices montées en parallèle. Les longueurs de clinquant de cuivre 15, 16 reliées à des câbles plats appropriés 17, 18 sont disposées en position directement adjacente au bord du vitrage dans la zone de coin du pare-brise, de sorte que le raccordement électrique a lieu dans ce cas par l'intermédiaire d'une fiche appropriée dans cette zone de coin du pare-brise.

La forme de réalisation représentée sur la Fig. 3 montre un pare-brise 20, dans lequel les fils de résistance chauffants 22 sont à nouveau disposés sous forme de boucles en U orientées horizontalement imbriquées les unes dans les autres. Dans ce cas cependant, les longueurs d'extrémité des boucles de fils ne sont pas coudées. Elles gardent au contraire leur orientation horizontale et sont brasées à deux conducteurs collecteurs de courant 25, 26 en forme de bandes. Ces conducteurs collecteurs 25, 26 sont disposés en position très rapprochée parallèlement l'un à l'autre le long du bord latéral 24 du pare-brise 20. La longueur du conducteur collecteur 26 n'est qu'environ la moitié de celle du conducteur collecteur 25 directement adjacent au bord latéral 24, de sorte que le conducteur collecteur 25 est relié aux moitiés supérieures des boucles de fils, et que le conducteur collecteur 26 est relié aux moitiés de boucles de fils inférieures. Les conducteurs de raccordement électrique 27, 28 sortant du vitrage en verre feuilleté 21 peuvent être à nouveau formés de câbles plats.

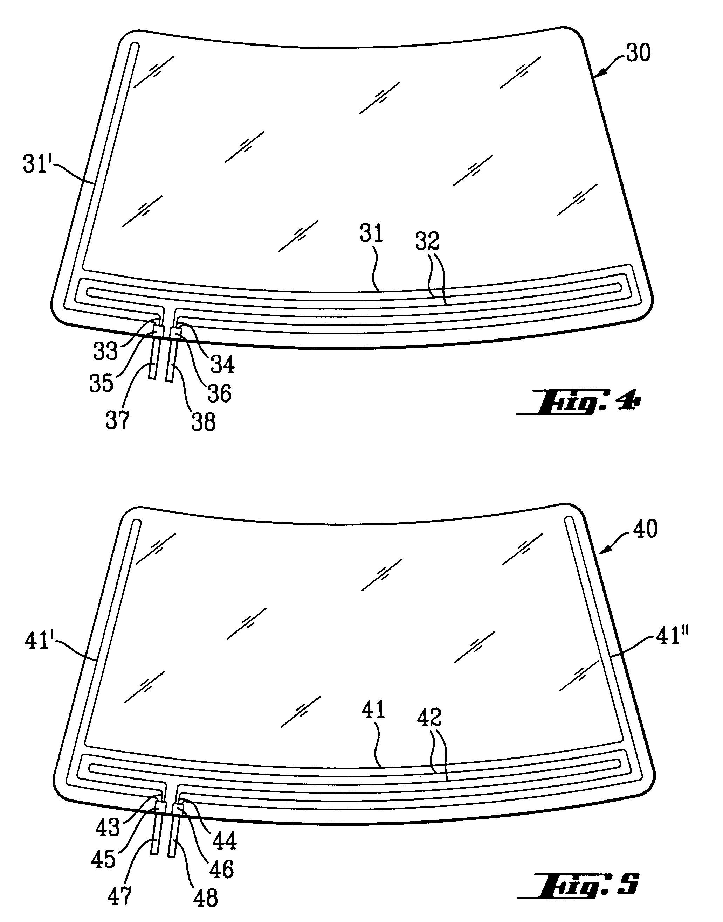

La Fig. 4 montre un pare-brise 30, qui est à nouveau pourvu dans la section inférieure, dans la zone de la position de repos des essuie-glaces, de boucles de fils 31, 32 orientées horizontalement imbriquées les unes dans les autres. Les extrémités 33, 34 de ces boucles de fils 31, 32 sont à nouveau brasées à des conducteurs collecteurs de courant 35, 36, qui sont disposés directement au bord inférieur du pare-brise dans la couche intermédiaire thermoplastique et sont reliées à des conducteurs de raccordement électrique 37, 38 sous forme de câbles plats. Tandis que les boucles de fils 32 sont formées en substance comme dans les formes de réalisation décrites précédemment, la boucle de fil 31 forme une branche 31' supplémentaire en forme de boucle le long d'un bord latéral vertical du pare-brise. Cette branche 31' des boucles chauffantes sert à chauffer également la zone du pare-brise adjacente aux montants en A de la carrosserie du véhicule du côté du conducteur. Ceci présente l'avantage que la neige balayée vers ce côté par l'essuie-glace fond et ne s'accumule pas de façon dérangeante le long du montant en A pendant la conduite du véhicule.

Le pare-brise 40 représenté sur la Fig. 5 représente une forme de réalisation, dans laquelle les zones adjacentes aux montants en A des deux côtés sont chauffées de surcroît. Dans ce cas aussi, la zone inférieure de la position de repos de l'essuie-glace est chauffée par des boucles de fils 41, 42 s'étendant en substance horizontalement. La boucle de fil 41 forme dans ce cas le long des deux bords latéraux chaque fois une branche 41' et 41" en forme de boucle s'étendant parallèlement aux bords latéraux. Les extrémités 43, 44 des boucles de fils sont à nouveau brasées à des conducteurs collecteurs 45, 46, qui sont pour leur part reliés à des conducteurs de raccordement électrique 47, 48 sous forme de câbles plats.

## Revendications

1. Pare-brise en verre feuilleté, qui est pourvu, dans la zone de la position de repos des essuie-glaces, de fils de résistance électrique chauffants montés en parallèle noyés dans la couche intermédiaire thermoplastique, qui sont en contact avec des pellicules de clinquant agissant comme conducteurs collecteurs, également noyées dans la couche intermédiaire et reliées à des conducteurs d'alimentation de courant, caractérisé en ce que les deux pellicules de clinquant agissant comme conducteurs collecteurs (5, 6; 15, 16; 25, 26; 35, 36; 45, 46) sont disposées très près l'une de l'autre, et que les fils de résistance chauffants (2; 12; 22; 31, 32; 41, 42) s'étendent en forme de boucles entre ces conducteurs collecteurs.

2. Pare-brise selon la revendication 1, caractérisé en ce que les fils de résistance chauffants (2) sont disposés sous forme de boucles imbriquées les unes dans les autres axialement symétriques par rapport à la ligne médiane (M-M) du pare-brise, les extrémités (3, 4) des boucles de fils sont coudées vers le bas et les pellicules de clinquant agissant comme conducteurs collecteurs (5, 6) sont disposées au milieu du bord inférieur du pare-brise.

3. Pare-brise suivant la revendication 1, caractérisé en ce que les fils de résistance chauffants (22) sont disposés sous forme de boucles en U imbriquées les unes dans les autres orientées horizontalement comportant des zones d'extrémité s'étendant de façon rectiligne et sont en contact avec des conducteurs collecteurs (25, 26) disposés près l'un de l'autre le long d'un bord latéral (24) du pare-brise.

4. Pare-brise suivant la revendication 1, caractérisé en ce que les fils de résistance chauffants (12) sont disposés sous forme de boucles orientées horizontalement imbriquées les unes dans les autres, les extrémités (13, 14) des boucles de fils sont coudées vers le bas dans la zone d'un coin inférieur du pare-brise, et les pellicules de clinquant agissant comme conducteurs collecteurs (15, 16) sont disposées dans cette zone de coin au bord inférieur du pare-brise.

5. Pare-brise selon l'une quelconque des revendications 1 à 4, caractérisé en ce qu'une ou plusieurs des boucles de fils (31) forment une branche en forme de boucle supplémentaire (31'), qui s'étend le long d'un bord latéral du pare-brise (30).

6. Pare-brise selon l'une quelconque des revendications 1 à 4, caractérisé en ce qu'une ou plusieurs des boucles de fils (41) forment deux branches en forme de boucles (41', 41"), qui sont disposées le long des deux bords latéraux du pare-brise (40).

7. Pare-brise selon l'une quelconque des revendications 1 à 6, caractérisé en ce que les fils de résistance chauffants sont disposés sous forme ondulée dans la couche intermédiaire thermoplastique.

8. Pare-brise selon l'une quelconque des revendications 1 à 6, caractérisé en ce que les fils de résistance chauffants sont disposés sous forme rectiligne, c'est-à-dire non ondulée, dans la couche intermédiaire thermoplastique.

9. Pare-brise selon l'une quelconque des revendications 1 à 8, caractérisé en ce que les fils de résistance chauffants sont constitués de fil de cuivre, en particulier de fil de cuivre vernis en noir.

10. Pare-brise selon l'une quelconque des revendications 1 à 9, caractérisé en ce que les conducteurs de raccordement électrique (7, 8; 17, 18; 27, 28; 37, 38; 47, 48) sortant du vitrage en verre feuilleté sont réalisés sous forme de câbles plats.
